# EUROPÄISCHE PATENTSCHRIFT

(11) **EP 1 415 435 B1**
(45) Veröffentlichungstag und Bekanntmachung des Hinweises auf die Patenterteilung: **21.09.2005**
(21) Anmeldenummer: 02753032.8
(22) Anmeldetag: 30.07.2002
(51) Int. Cl.: H04L 12/18

(54) **VERFAHREN ZUR VERWALTUNG EINES MULTICAST-DIENSTES**
METHOD FOR THE ADMINISTRATION OF A MULTICAST SERVICE
PROCEDE DE GESTION D'UN SERVICE MULTI-DIFFUSION

(30) Priorität: 06.08.2001 DE 10138514; 11.12.2001 DE 10160631
(43) Veröffentlichungstag der Anmeldung: 06.05.2004
(73) Patentinhaber: SIEMENS AKTIENGESELLSCHAFT, 80333 München (DE)
(72) Erfinder: BECKMANN, Mark, 38124 Braunschweig (DE); ECKERT, Michael, 38122 Braunschweig (DE); GESSNER, Christina, 81373 München (DE); GOTTSCHALK, Thomas, 12524 Berlin (DE); HANS, Martin, 31139 Hildesheim (DE); KROTH, Norbert, 14471 Potsdam (DE); LANGEFELD, Dirk, 40764 Langenfeld (DE); OTTE, Andreas, 29227 Celle (DE); SCHWAGMANN, Norbert, 38102 Braunschweig (DE)
(86) Internationale Anmeldenummer: PCT/DE2002/002805
(87) Internationale Veröffentlichungsnummer: WO 2003/017574

(56) Entgegenhaltungen:
- EP-A- 0 828 355
- EP-A- 1 071 296
- EP-A- 1 213 874

## Beschreibung

Die Erfindung bezieht sich auf ein Verfahren zur Verwaltung eines Multicast-Dienstes, bei dem mobile Endgeräte, deren Benutzer den Multicast-Dienst abboniert haben, über ein Mobilkommunikationsnetzwerk Multicast-Nachrichten erhalten.

Ein derartiges Verfahren ist aus EP-A-0 828 355 bekannt.

Bei einem Multicast-Dienst wird verschiedenen Teilnehmern, denen dieselbe Multicast-Nachricht übermittelt werden soll, eine Multicast-Gruppe zugeordnet, in der die Teilnehmer zusammengefasst sind. Diese Multicast-Gruppe wird durch eine Multicast-Adresse identifiziert. Die zu übertragenden Nachrichtendaten werden daraufhin nur einmal an diese Multicast-Adresse gesendet. Über gemeinsame Verbindungswege von einem Sender der Multicast-Nachricht zu den Empfängern der Multicast-Nachricht wird im Idealfall nur einmal gesendet. Für den Sender ist es nicht erforderlich zu wissen, wo und wie viele Empfänger sich hinter der Multicast-Adresse verbergen.

Bei bekannten Multicast-Diensten wird es als nachteilig empfunden, dass Multicast-Nachrichten unabhängig davon, ob ein bestimmtes, zu einer betreffenden Multicast-Gruppe gehörendes mobiles Endgerät nach dem Willen des Benutzers Multicast-Nachrichten empfangen soll, in sämtliche Mobilfunkzellen ausgesendet werden, in denen sich mobile Endgeräte befinden, die zu der Multicast-Gruppe gehören. Infolgedessen werden bei der Übertragung einer Multicast-Nachricht häufig Funkressourcen belegt, die einem mobilen Endgerät zugeordnet sind, das nach dem Willen seines Benutzers gerade keine Multicast-Nachrichten empfangen soll.

Ausgehend hiervon liegt der Erfindung die Aufgabe zugrunde, ein Verfahren zur Verwaltung eines Multicast-Dienstes zu schaffen, bei dem die zur Verfügung stehenden Funkressourcen wirtschaftlicher genutzt werden.

Diese Aufgabe wird bei dem eingangs genannten Verfahren dadurch gelöst, dass mit Betätigung jeweils einer Eingabeeinrichtung der mobilen Endgeräte eine De-/Aktivierungs-Information erzeugt wird, die angibt, ob der Multicast-Dienst aktiviert oder deaktiviert ist, und die De-/Aktivierungs-Information an das Mobilkommunikationsnetzwerk (RNC) übermittelt wird.

Durch Erzeugen der Information, dass der Multicast-Dienst zeitweise deaktiviert ist, werden die Voraussetzungen geschaffen, dass das Mobilkommunikationsnetzwerk, dem die Information übermittelt wird, verbessert über die Belegung seiner Funkressourcen entscheiden kann. Es ist jederzeit darüber informiert, bei welchem mobilen Endgerät der Multicast-Dienst gerade aktiviert ist.

Bevorzugt übermittelt das Mobilkommunikationsnetzwerk eine Nachricht des Multicast-Dienstes nur an solche mobile Endgeräte, bei denen die Deaktivierungs-Information nicht vorliegt. Auf diese Weise werden effizient Funkressourcen eingespart.

Der Multicast-Dienst kann in eine Mehrzahl Teildienste aufgeteilt sein, wobei dann die Eingabeeinrichtung eine Deaktivierung jedes einzelnen Teildienstes gestattet. Selbstverständlich kann die Eingabeeinrichtung auch zur Wiederaktivierung eines einzelnen oder sämtlicher Teildienste eingesetzt werden.

Besonders bevorzugt werden die Aktivierungs-Informationen in dem mobilen Endgerät und in dem Mobilkommunikationsnetzwerk in Form einer Tabelle gespeichert, die für jeden Teildienst einen Eintrag enthält, ob der Teildienst aktiviert oder deaktiviert ist.

Diese Tabelle kann seitens des Mobilkommunikationsnetzwerkes in ständig aktualisierter Form vorliegen, wobei an dem Multicast-Dienst teilnehmende Endgeräte durch entsprechende Informationssignalübertragung an das Mobilkommunikationsnetzwerk ihre jeweiligen Tabellen im Rahmen von Signalisierungsverbindungen aktualisieren.

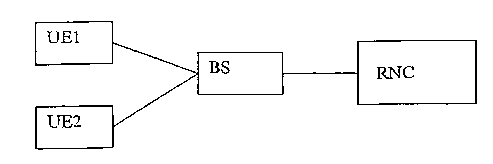

Die Erfindung wird nachfolgend anhand eines Ausführungsbeispiels noch näher erläutert. Die einzige Figur zeigt ein Blockdiagramm zur Veranschaulichung der Signalisierungsverbindungen zwischen einem Knoten eines Mobilkommunikationsnetzwerks, einer Basisstation und zugeordneten mobilen Endgeräten.

Es wird angenommen, dass sich zwei Mobilfunkstationen E1, UE2 in einer Mobilfunkzelle Z befinden, die von einer Basisstation BS aufgespannt wird, die über eine Festnetzverbindung mit einem Knoten eines Mobilkommunikationsnetzwerks RNC verbunden ist. Sowohl die mobilen Endgeräte UE1, UE2 als auch der Knoten des Mobilkommunikationsnetzwerks RNC arbeiten nach Protokollen der UMTS-Protokollarchitektur. Innerhalb dieser Architektur sind insbesondere sog. RRC-Zustände definiert, die Aussagen darüber treffen, in welcher Signalisierungsstufe sich ein mobiles Endgerät mit dem Knoten des Mobilkommunikationsnetzwerkes RNC befindet.

Beide mobilen Endgeräte UE1 und UE2 sollen sich zu Beginn im "Idle Mode" befinden, bei dem die mobilen Endgeräte UE1, UE2 "Broadcast"-Nachrichten vom Knoten des Mobilkommunikationsnetzwerks RNC empfangen und auf Benachrichtigungskanäle (PICH, PCH) hören. Der Knoten des Mobilkommunikationsnetzwerks RNC hat keine Kenntnis über die mobilen Endgeräte UE1, UE2 selbst und auch nicht darüber, ob sich diese mobilen Endgeräte UE1, UE2 in einer von ihm kontrollierten Zelle befinden.

Die Benutzer von UE1 und UE2 haben beide die Multicast-Dienste A, B und C abboniert und gehören zugeordneten Multicast-Gruppen MA, MB, MC an.

Es wird weiter angenommen, dass das mobile Endgerät UE1 aus dem RRC-Zustand "Idle Mode" in den RRC-Zustand "CELL_DCH" wechselt, weil es beispielsweise einen Anruf erhalten hat. Zu diesem Zweck wird das mobile Endgerät UE1 benachrichtigt, dass ein Anruf ankommt. Das mobile Endgerät UE1 baut daraufhin eine Signalisierungsverbindung zu dem Knoten des Mobilkommunikationsnetzwerks RNC auf, in dem das mobile Endgerät UE1 eine Nachricht "RRC Connection Request" an den Knoten des Mobilkommunikationsnetzwerks RNC sendet. Der Knoten des Mobilkommunikationsnetzwerks RNC sendet daraufhin ein Nachricht "RRC Connection Set Up" an das mobile Endgerät UE1 zurück. Das mobile Endgerät UE1 konfiguriert seine Protokollschichten und sendet eine Nachricht "RRC Connection Set Up Complete" an den Knoten des Mobilkommunikationsnetzwerks RNC zurück, um den Aufbau der Signalisierungsverbindung zu bestätigen.

Beispielsweise in der Nachricht "RRC Connection Set Up Complete" an den Knoten des Mobilkommunikationsnetzwerks RNC kann nun eine Tabelle an den Knoten des Mobilkommunikationsnetzwerks RNC gesendet werden, die dort gespeichert wird. In der Tabelle ist jedem Multicast-Dienst A, B, C jeweils eine Information zugeordnet, die angibt, ob der jeweilige Multicast-Dienst aktiviert oder deaktiviert ist. Im Falle einer Deaktivierung sollen keine Multicast-Nachrichten an das betreffende mobile Endgerät UE1, UE2 ausgesendet werden.

Einträge in diese Tabelle können über Tastaturen als Eingabeeinrichtungen der mobilen Endgeräte UE1, UE2 erfolgen.

Wenn nun eine Übertragung einer Multicast-Nachricht für die Multicast-Gruppe MA ansteht, muss der Knoten des Mobilkommunikationsnetzwerks RNC herausfinden, wo sich die mobilen Endgeräte der betreffenden Multicast-Gruppe befinden. Da auch Gebühren für die Nutzung der Multicast-Dienste A, B und C zu berechnen sind, muss der Knoten des Mobilkommunikationsnetzwerks RNC außerdem Information darüber besitzen, welche Benutzer einen jeweiligen Multicast-Dienst A, B und C aktiviert haben und empfangen wollen.

Dafür prüft der Knoten des Mobilkommunikationsnetzwerks RNC für die mobilen Endgeräte UE1, UE2, die er steuert, nach, ob für sie die Multicast-Gruppe MA in ihrer zugehörigen Tabelle als aktiviert markiert ist.

Außerdem benachrichtigt der Knoten des Mobilkommunikationsnetzwerks RNC das mobile Endgerät UE2, dass eine Multiast-Übertragung einer Nachricht für die Multicast-Gruppe MA ansteht. Das mobile Endgerät UE2 prüft nun in seiner Tabelle, ob sein Benutzer die Multicast-Gruppe MA aktiviert hat. Da dies im vorliegenden Ausführungsbeispiel der Fall sein soll, baut das mobile Endgerät UE2 nun über die Basisstation BS eine Signalisierungsverbindung zu dem Knoten des Mobilkommunikationsnetzwerks RNC auf und übermittelt ebenfalls in einer "RRC Connection Set Up Complete"-Nachricht seine aktuelle Tabelle an den Knoten des Mobilkommunikationsnetzwerks RNC.

Der Knoten des Mobilkommunikationsnetzwerks RNC ist nunmehr darüber informiert, dass die beiden mobilen Endgeräte UE1, UE2 die Daten der Nachricht für die Multicast-Gruppe MA empfangen möchten und verteilt entsprechend die zu Verfügung stehenden Funkressourcen. Für weitere mobile Endgeräte der Multicast-Gruppe MA, bei denen ein oder mehrere der Multicast-Dienste deaktiviert ist/sind unterbleibt eine Nachrichtenübertragung.

Es ist hervorzuheben, dass die Aktualisierung der Tabellen am Knoten des Mobilkommunikationsnetzwerks RNC in solcher Weise stattfinden kann, dass eine zuverlässige Aktualisierung gewährleistet ist. Zu diesem Zweck können jegliche, regelmäßig auftretende Signalisierungsverbindungen zwischen mobilem Endgerät UE1, UE2 und dem Knoten des Mobilkommunikationsnetzwerks RNC benutzt werden. Die Übermittlung einer Tabelle über Aktivierung/Deaktivierung der Multicast-Dienste A, B, C kann auch nur dann erfolgen, wenn die mobilen Endgeräte UE1, UE2 eine Benachrichtigung erhalten, dass eine Multicast-Nachricht vorliegt, die für die Multicast-Gruppe A, der 'sie angehören, bestimmt ist.

## Patentansprüche

1. Verfahren zur Verwaltung eines Multicast-Dienstes, bei dem mobile Endgeräte, deren Benutzer den Multicast-Dienst abboniert haben, über ein Mobilkommunikationsnetzwerk unter Benachrichtigung durch das Mobilkommunikationsnetzwerk Multicast-Nachrichten erhalten,
**dadurch gekennzeichnet,**
**dass** mit Betätigung jeweils einer Eingabeeinrichtung der mobilen Endgeräte (UE1; UE2) eine De-/Aktivierungs-Information erzeugt wird, die angibt, ob der Multicast-Dienst (A; B; C) aktiviert oder deaktiviert ist, und die De-/Aktivierungs-Information an das Mobilkommunikationsnetzwerk (RNC) übermittelt wird.

2. Verfahren nach Anspruch 1,
**dadurch gekennzeichnet,**
**dass** das Mobilkommunikationsnetzwerk (RNC) eine Nachricht des Multicast-Dienstes (A; B; C) nur an solche mobile Endgeräte (UE1; UE2) übermittelt, bei denen die Aktivierungs-Information vorliegt.

3. Verfahren nach Anspruch 1,
**dadurch gekennzeichnet,**
**dass** der Multicast-Dienst (A; B; C) in eine Mehrzahl Teildienste aufgeteilt ist und die Eingabeeinrichtung eine Deaktivierung jedes einzelnen Teildienstes gestattet.

4. Verfahren nach Anspruch 3,
**dadurch gekennzeichnet,**
**dass** De-Aktivierungs-Informationen in den mobilen Endgeräten (UE1; UE2) und in dem Mobilkommunikationsnetzwerk (RNC) in Form einer Tabelle gespeichert werden, die für jeden Teildienst einen Eintrag enthält, ob der Teildienst aktiviert oder deaktiviert ist.

## Claims

1. Method for administration of a multicast service, in which mobile terminals, whose users have subscribed to the multicast service, receive multicast messages via a mobile communications network, being informed by the mobile communications network,
**characterized**
**in that** the operation of a respective input device for the mobile terminals (UE1; UE2) results in the production of de/activation information which indicates whether the multicast service (A; B; C) is activated or is deactivated, and the de/activation information is transmitted to the mobile communications network (RNC).

2. Method according to Claim 1,
**characterized**
**in that** the mobile communications network (RNC) transmits a message for the multicast service (A; B; C) only to those mobile terminals (UE1; UE2) for which the activation information is present.

3. Method according to Claim 1,
**characterized**
**in that** the multicast service (A; B; C) is subdivided into two or more service elements, and the input device allows deactivation of each individual service element.

4. Method according to Claim 3,
**characterized**
**in that** the deactivation information is stored in the form of a table in the mobile terminals (UE1; UE2) and in the mobile communications network (RNC), which table contains an entry for each service element as to whether that service element is activated or deactivated.

## Revendications

1. Procédé de gestion d'un service de multidiffusion, dans lequel des terminaux mobiles dont les utilisateurs sont abonnés au service de multidiffusion reçoivent par l'intermédiaire d'un réseau de radiocommunication mobile, après information par le réseau de radiocommunication mobile, des messages de multidiffusion,
**caractérisé par le fait que**,
lors de l'actionnement à chaque fois d'un dispositif d'entrée des terminaux mobiles (UE1 ; UE2), on produit une information d'activation / désactivation qui indique si le service de multidiffusion (A ; B ; C) est activé ou désactivé et **par le fait que** l'information d'activation / désactivation est transmise au réseau de radiocommunication mobile (RNC).

2. Procédé selon la revendication 1,
**caractérisé par le fait que**
le réseau de radiocommunication mobile (RNC) transmet un message du service de multidiffusion (A ; B ; C) seulement à ceux des terminaux mobiles (UE1 ; UE2) pour lesquels il existe une information d'activation.

3. Procédé selon la revendication 1,
**caractérisé par le fait que**
le service de multidiffusion (A ; B ; C) est divisé en plusieurs sous-services et **par le fait que** le dispositif d'entrée permet une désactivation de chaque sous-service individuel.

4. Procédé selon la revendication 3,
**caractérisé par le fait que**
des informations d'activation / désactivation sont mémorisées dans les terminaux mobiles (UE1 ; UE2) et dans le réseau de radiocommunication mobile (RNC) sous la forme d'un tableau qui contient pour chaque sous-service un enregistrement indiquant si le sous-service est activé ou désactivé.
